# EUROPÄISCHE PATENTSCHRIFT

(11) **EP 0 472 746 B1**
(45) Veröffentlichungstag und Bekanntmachung des Hinweises auf die Patenterteilung: **04.05.1994**
(21) Anmeldenummer: 90115826.1
(22) Anmeldetag: 17.08.1990
(51) Int. Cl.: H02K 5/22, H02K 5/10

(54) **Elektromotor, insbesondere feuchtigkeitsdicht geschlossener Kommutatormotor zum Antrieb einer axial angeflanschten Hydraulik-Pumpe**
Electric motor, especially humidity-proof closed commutator motor for the drive of an axiel flanged hydraulic pump
Moteur électrique, en particulier moteur à collecteur fermé imperméable à l'humidité, pour l'entraînement d'une pompe hydraulique fixée par bride axiale

(43) Veröffentlichungstag der Anmeldung: 04.03.1992
(73) Patentinhaber: SIEMENS AKTIENGESELLSCHAFT, 80333 München (DE)
(72) Erfinder: Hofmann, Manfred, D-8702 Hettstadt (DE); Seuffert, Werner, D-8722 Bergrheinfeld (DE)

(56) Entgegenhaltungen:
- EP-A- 0 221 304
- EP-A- 0 360 623
- DE-A- 1 613 222
- GB-A- 2 186 439
- US-A- 4 518 886

## Beschreibung

Die Erfindung bezieht sich auf einen Elektromotor, insbesondere feuchtigkeitsdicht geschlossenen Kommutatormotor zum Antrieb einer axial angeflanschten Hydraulik-Pumpe, gemäß Oberbegriff des Anspruchs 1; ein derartiger Elektromotor ist durch die EP-A2-0 360 623 bekannt.

Bei dem bekannten vorgenannten Motor dient die Abdeckkappe selbst zum feuchtigkeitsdichten Abschluß des Motorgehäuses an dessen einer Stirnseite und gleichzeitig als Lagerschild; einstückig mit der aus Kunststoff gespritzten Abdeckkappe ist ein integriertes Steckergehäuse mit eingegossenen elektrischen Kontaktleitungen vorgesehen, die mit Steckerstiften nach außen und mit Steckerbuchsen in das Motorgehäuse ragen, derart daß sie beim Anbau der Abdeckkappe an das Motorgehäuse mit motorseitigen Gegenkontaktstiften kontaktiert werden.

Durch die EP-A1-0 221 304 ist ein Pumpenmotor in geschlossener Bauart mit einem fest in einem axialen Motorgehäuseschlitz gehaltenen äußeren Anschlußstecker bekannt, dessen Anschlußleitungen mittels einer gequetschten Dichtung dichtend in das Motorgehäuse geführt sind. Eine über das bereits mit einem Motorlagerschild an einer Stirnseite verschlossene Gehäuse ist zusätzlich, eine ausschließlich Dichtungsfunktionen dienende Abdeckkappe übergestülpt.

Bei einem bekannten (DE-U-89 10 214) Motor zum Antrieb einer Hydraulikpumpe ragt aus der durch ein Lagerschild abgeschlossenen Stirnseite eines ansonsten topfförmigen Motorgehäuses die Rotorwelle mit einem Exzenterwellenende heraus, das die Stößel einer angeflanschten Hydraulik-Pumpe antreibt. In dem Lagerschild ist eine Bürstenplatte für den als Antrieb vorgesehenen Kommutatormotor gehalten. Von der Bürstenplatte führt durch eine dichtende Isolierstoff-Durchführung die zur Speisung und/oder Regelung des Kommutatormotors notwendige Anschlußleitung aus dem Motorgehäuse hinaus. Außerhalb des Motorgehäuses wird in diesem Fall diese Anschlußleitung durch Crimpen oder Verlöten mit einem Stecker kontaktiert, der durch eine Schelle bzw. eine Verschraubung am Motorgehäuse befestigt ist.

Ein demgegenüber mit geringerem Fertigungs- und Montageaufwand herstellbarer Steckeranschluß der Motoranschlußleitung kann bei einem Elektromotor der eingangs genannten Art erfindungsgemäß durch die Lehre des Anspruchs 1 erreicht werden.

Die erfindungsgemäße Halterung und Sicherung eines Feststeckers mittels einer auf den Motor in einfacher Weise aufsteckbaren und an diesem fixierbaren Kunststoff-Abdeckkappe mit Paßöffnungen für einen als getrenntes Bauteil einsteckbaren Anschlußstecker ermöglicht eine sichere Halterung des Anschlußsteckers ohne nachträgliche Bearbeitung und/oder Beschädigung der Außenfläche des Motorgehäuses, die insbesondere zum Schutz gegen korrosive Medien in vorteilhafter Weise beschichtet werden kann.

Nach Ausgestaltung der Erfindung ist das äußere Ende der Anschlußleitung mit Steckerstiften des Feststeckers kontaktiert und isoliert in einem Steckergehäuse des Feststeckers eingespritzt bzw. eingegossen; zur weiteren fertigungstechnischen Vereinfachung ist vorgesehen, die Bürstenhalterung, die mit ihrem einen Ende mit der Bürstenhalterung kontaktierte und mit ihrem anderen Ende mit dem Feststecker isoliert kontaktierte Anschlußleitung zu einer vormontierbaren Bauteileinheit zusammenzufassen, die dann am fertigmontierten Motor durch axiales Überstecken der Kunststoff-Abdeckkappe lagefixierbar ist. Zum Schutz und gegebenenfalls zur Lagefixierung der an dem einen Motorende herausgeführten und an dem anderen Motorende über den Feststecker und die Abdeckkappe fixierten Anschlußleitung ist nach einer Ausgestaltung der Erfindung vorgesehen, an die Abdeckkappe einen axial, dicht über dem Gehäuse verlaufenden Abdeckkanal anzuspritzen.

Die Erfindung sowie weitere vorteilhafte Ausgestaltungen der Erfindung werden im folgenden anhand eines schematisch dargestellten Ausführungsbespiels in der Zeichnung näher erläutert; darin zeigen:
- FIG 1: einen axialen Längsschnitt durch einen zum Antrieb eines Hydraulik-Pumpen-Aggregates vorgesehenen Kommutatormotor,
- FIG 2: eine axiale Draufsicht auf die linke Stirnseite des Antriebsmotors gemäß FIG 1.

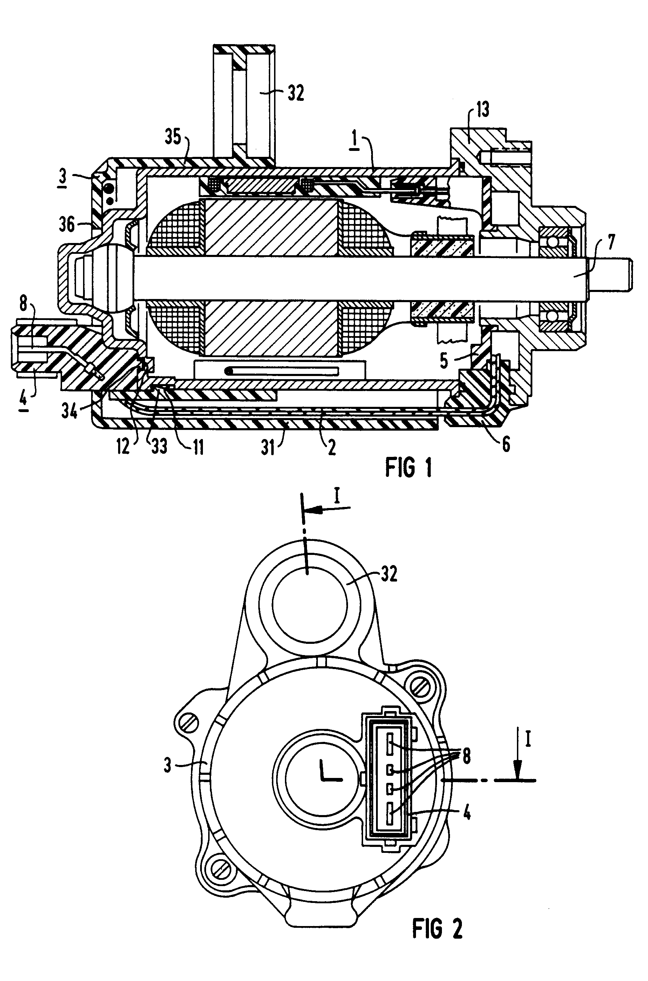

FIG 1, 2 zeigen einen Kommutatormotor mit einem topfförmigen Motorgehäuse 1, der mit einem verlängerten Ende seiner Rotorwelle 7 aus der rechten, durch einen Lagerschild 13 verschlossenen Stirnseite herausragt und mit einem Exzenterende die hier nicht gezeigten Pumpenstößel einer am Lagerschild 13 angeflanschten Hydraulik-Pumpe eines Kraftfahrzeug-Antiblockier-Bremssystems antreibt. Aus dem rechten Ende des Motorgehäuses 1 bzw. Lagerschildes 13 ist eine mit inneren Enden an einer Bürstenplatte 5 kontaktierte Anschlußleitung durch eine dichtende Isolierstoff-Durchführung 6 heraus und entlang der Außenfläche des Motorgehäuses 1 zu einem Feststecker 4 an der anderen Stirnseite des Kommutatormotors geführt.

Die Anschlußleitung 2 ist als vormontierbare Bauteileinheit mit Steckerstiften 8 in einem Steckergehäuse des Feststeckers 4 kontaktiert und isoliert eingegossen. Zur Fixierung des Feststeckers 4 mit der vormontierten bzw. vorkontaktierten Anschlußleitung wird nach dem vollständigen Zusammenbau des Motors eine topfförmige Kunststoff-Abdeckkappe 3 vom linken Ende über das Motorgehäuse 1 aufgesteckt, derart daß die Kunststoff-Abdeckkappe 3 dicht am Motorgehäuse 1 anliegt und mit einem Abdeckkanal 31 die Anschlußleitung 2 entlang ihres Verlaufes parallel zur Außenumfangsfläche des Motorgehäuses 1 zusätzlich schützt.

Zur tangentialen und axialen Lagefixierung der Kunststoff-Abdeckkappe 3 und/oder des Feststeckers 4 relativ zum Motorgehäuse 1 dienen vorstehende Rastnasen 33,34 an der Kunststoff-Abdeckkappe 3 bzw. am Feststecker 4, die bei Erreichen der Betriebsendlage in korrespondierende Aussparungen 11,12 am Motorgehäuse 1 formschlüssig einrasten. Im vorliegenden Fall sind zur axialen Sicherung mehrere über den Umfang des Motorgehäuses 1 verteilte Aussparungen 11 für korrespondierende einschnappende Rastnasen 33 und zur radialen Sicherung eine Aussparung 12 für eine korrespondierende einsteckbare, stiftförmige Rastnase 34 am Feststecker 4 vorgesehen. Diese Aussparungen 11,12 können vorteilhafterweise vor der Bearbeitung des Motorgehäuses zur Korrosionssicherung, z.B. durch Pulverbeschichtung eingebracht und mit einer Schutzschicht überzogen werden, die bei der Lagefixierung des Feststeckers 4 und Überstecken und Verrasten der Abdeckkappe 3 nicht beschädigt werden. An die Abdeckkappe 3 ist einstückig eine Aufhängelasche 32 zur Halterung des Motoraggregats mit angespritzt.

## Patentansprüche

1. Feuchtigkeitsdicht geschlossener Elektromotor, insbesondere Kommutatormotor zum Antrieb einer axial angeflanschten Hydraulikpumpe, mit einer dichtend aus dem Motorgehäuse (1) herausgeführten Motor-Anschlußleitung (2), deren äußeres Ende mit einem Kunststoff-Anschluß-Feststecker (4) verbunden ist, der durch eine auf ein Ende des Elektro-Motorgehäuses (1) aufgesteckte und an diesem in ihrer Betriebsendlage fixierbare topfförmige Kunststoff-Abdeckkappe (3) gehalten ist**, dadurch gekennzeichnet**, daß die Motor-Anschlußleitung (2) durch eine dichtende Isolierstoff-Durchführung (6) hindurch aus dem Motorgehäuse (1) zu dem Feststecker (4) geführt und dieser in eine Einsteck-Paßöffnung im Topfboden (36) der Abdeckkappe (3) eingesteckt ist.

2. Feuchtigkeitsdicht geschlossener Elektromotor nach Anspruch 1, **dadurch gekennzeichnet**, daß das äußere Ende der Anschlußleitung (2) mit Steckerstiften (42, 43) des Feststeckers (4) kontaktiert und isoliert in ein Steckergehäuse (41) des Feststeckers (4) eingespritzt bzw. eingegossen ist.

3. Feuchtigkeitsdicht geschlossener Kommutatormotor mit einer motorinneren, insbesondere in einem Lagerschild (13) fixierten, zumindest mit Teilen des inneren Endes der Motor-Anschlußleitung (2) verbundenen Bürstenhalterung (Bürstenplatte 5) nach Anspruch 1 oder 2, **dadurch gekennzeichnet**, daß die Bürstenhalterung (Bürstenplatte 5), die Anschlußleitung (2) mit der Isolierstoff-Durchführung (6) und der Feststecker (4) zu einer vormontierbaren Bauteileinheit zusammengefaßt sind.

4. Feuchtigkeitsdicht geschlossener Elektromotor mit an seinem einen Ende axial vorstehenden Antrieb, insbesondere für eine Hydraulik-Pumpe, und an diesem Ende gehäuseinnen gehalterter Bürstenplatte (5) mit einer Isolierstoff-Durchführung (6) zur Herausführung der Motor-Anschlußleitung (2) aus dem Motorgehäuse (1) nach einem der Ansprüche 1 - 3, **dadurch gekennzeichnet**, daß die Kunststoff-Abdeckkappe (3) auf das andere Ende des Motorgehäuses (1) axial aufgesteckt ist.

5. Feuchtigkeitsdicht geschlossener Elektromotor nach einem der Ansprüche 1 - 4, **gekennzeichnet durch** einen an die Abdeckkappe (3) anschließenden, insbesondere einstückig angespritzten, axialen Abdeckkanal (31) für den entlang des Motorgehäuses (1) verlaufenden Teil der Motor-Anschlußleitung (2) im Bereich zwischen der Durchführung (6) und der eigentlichen Abdeckkappe (3).

6. Feuchtigkeitsdicht geschlossener Elektromotor nach einem der Ansprüche 1 - 5, **gekennzeichnet durch** eine tangentiale und/oder axiale und/oder radiale Fixierung der Betriebsendlage der Abdeckkappe (3) bzw. des Feststeckers (4) relativ zum Motorgehäuse (1) durch gegenseitige Rastmittel (Rastnasen 33, 34, Aussparungen 11, 12).

7. Feuchtigkeitsdicht geschlossener Elektromotor nach einem der Ansprüche 1 - 6, **dadurch gekennzeichnet,** daß an die Abdeckkappe (3) Halterungsmittel (Aufhängungslasche 32) zur Befestigung des Motorantriebs mitangeformt sind.

## Claims

1. Moisture-tight closed electric motor, in particular a commutator motor for driving an axially flange-mounted hydraulic pump, having a motor connecting lead (2) brought out of the motor housing (1) in a sealed manner, the outer end of which motor connecting lead is connected to a fixed, plastics connecting plug (4) held by a pot-shaped plastics covering cap (3) which is slipped on to one end of the electric motor housing (1) and can be secured, in its end operating position, to this motor housing, characterised in that the motor connecting lead (2) is brought out of the motor housing (1) to the fixed plug (4) through a sealed, insulating material duct (6) and this fixed plug is inserted in an insertion fitting aperture in the pot base (36) of the covering cap (3).

2. Moisture-tight closed electric motor according to claim 1, characterised in that the outer end of the connecting lead (2), together with plug pins (42, 43) (sic) of the fixed plug (4), is moulded into a plug housing (41) (sic) of the fixed plug (4) by injection and/or casting in a manner providing contact and insulation.

3. Moisture-tight closed commutator motor having a brush holder (brush plate 5) inside the motor, which brush holder is secured, in particular, in an end housing (13) and is connected to at least parts of the inner end of the motor connecting lead (2), according to claim 1 or 2, characterised in that the brush holder (brush plate 5), the connecting lead (2) together with the insulating material duct (6), and the fixed plug (4) are combined to form a pre-assembled unit of components.

4. Moisture-tight closed electric motor having a drive projecting axially at one end, in particular for a hydraulic pump, and a brush plate (5) held at this end on the inside of the housing, the said brush plate having a insulating material duct (6) for bringing the motor connecting lead (2) out of the motor housing (1), according to one of claims 1 to 3, characterised in that the plastics covering cap (3) is slipped axially on to the other end of the motor housing (1).

5. Moisture-tight closed electric motor according to one of claims 1 to 4, characterised by an axial covering conduit (31) for the part of the motor connecting lead (2) extending along the motor housing (1) in the region between the duct (6) and the covering cap (3) itself.

6. Moisture-tight closed electric motor according to one of claims 1 to 5, characterised by a tangential and/or axial and/or radial attachment of the end operating position of the covering cap (3) and the fixed plug (4), respectively, relative to the motor housing (1) by means of mutual locking means (latches 33, 34, recesses 11, 12).

7. Moisture-tight closed electric motor according to one of claims 1 to 6, characterised in that holding means (suspension bracket 32) for securing the motor drive are pre-formed on the covering cap (3).

## Revendications

1. Moteur électrique fermé de façon étanche à l'humidité, notamment moteur à collecteur destiné à l'entraînement d'une pompe hydraulique bridée axialement, comportant un conducteur (2) de branchement de moteur sortant de façon étanche de l'enveloppe (1) du moteur, dont l'extrémité extérieure est reliée à une fiche fixe (4) de branchement en matière plastique, qui est maintenue par un capot (3) en matière plastique, en forme de cuvette enfilé sur une extrémité de l'enveloppe (1) du moteur électrique et susceptible d'être fixé sur celui-ci dans son état final de fonctionnement, caractérisé en ce que le conducteur (2) de branchement de moteur van en passant dans une pièce de traversée étanche (6) en matière isolante, de l'enveloppe (1) du moteur à la fiche fixe (4), et en ce que celle-ci est enfilée dans une ouverture ajustée destinée à l'enfilage, située dans le fond en forme de cuvette (36) du capot (3).

2. Moteur électrique fermé de façon étanche selon la revendication 1, caractérisé en ce que l'extrémité extérieure du conducteur de branchement (2) est mise en contact avec des tiges (42, 43) de la fiche fixe (4) et est moulée ou coulée, avec isolation, dans une enveloppe (41) de fiche.

3. Moteur électrique à collecteur fermé de façon ètanche, comportant un support de balai (plaque 5 pour balais) à l'intérieur du moteur, notamment fixé dans une plaque de support (13), et relié à au moins certaines pièces de l'extrémité intérieure du conducteur (2) de branchement du moteur, selon la revendication 1 ou 2, caractérisé en ce que le support de balais (plaque 5 pour balais) le conducteur de branchement (2) comportant la traversée (6) en matière isolante et la fiche fixe (4) sont assemblés en un sous-ensemble partiel susceptible d'être préfabriqué.

4. Moteur électrique fermé de façon étanche, comportant à l'une de ses extrémités un dispositif d'entraînement faisant saillie axialement, destiné notamment à une pompe hydraulique et une plaque (5) pour balais maintenue à cette extrémité du côté intérieur de l'enveloppe, comportant une traversée (6) en matière isolante destinée à faire passer hors de l'enveloppe (1) le conducteur (2) de branchement du moteur, selon l'une des revendications 1 à 3, caractérisé en ce que le capot (3) en matière plastique est enfilé axialement sur l'autre extrémité de l'enveloppe (1) du moteur.

5. Moteur électrique fermé de façon étanche selon l'une des revendications 1 à 4, caractérisé en ce qu'il comporte un canal de recouvrement (31) axial, se raccordant au capot (3), notamment moulé par injection en faisant corps avec celui-ci, destiné à la partie du conducteur (2) de branchement du moteur qui s'étend le long de l'enveloppe (1) du moteur, dans la zone située entre la traversée (6) et le capot (3) proprement dit.

6. Moteur électrique fermé de façon étanche selon l'une des revendications 1 à 5, caractérisé en ce qu'il comporte une fixation tangentielle et/ou axiale et/ou radiale de la position finale de fonctionnement du capot (3) ou de la fiche fixe (4) par rapport à l'enveloppe (1) du moteur, à l'aide de moyens d'encliquetage opposés (dents d'encliquetage 33, 34, évidements 11, 12).

7. Moteur électrique fermé de façon ètanche selon l'une des revendications 1 à 6, caractérisé en ce que des moyens de maintien (pattes de suspension 32) destinés à la fixation du dispositif d'entraînement du moteur sont issus du capot (3).
